# EUROPEAN PATENT APPLICATION

(11) **EP 4 344 932 A1**
(43) Date of publication of application: **03.04.2024**
(21) Application number: 23382970.4
(22) Date of filing: 25.09.2023
(51) Int. Cl.: B60L 50/10

(54) **SYSTEM INCORPORATED IN DIESEL ELECTRIC GAS CARRIER SHIPS (DFDE/TFDE) FOR THE TRANSFORMATION OF EVAPORATED NATURAL GAS (BOG) INSIDE THE TANKS INTO ELECTRICAL ENERGY AND ITS DISTRIBUCTION TO LAND**

(30) Priority: 29.09.2022 ES 202230839
(71) Applicant: Herias Corral, Manuel, 33449 Gozón (Asturias) (ES); Pastor García, Javier, 33449 Gozón (Asturias) (ES)
(72) Inventor: Herias Corral, Manuel, 33449 Gozón (Asturias) (ES); Pastor García, Javier, 33449 Gozón (Asturias) (ES)
(74) Representative: De la Fuente Fernandez, Dionisio

(57) **Abstract**

The present invention consists of a system that allows gas carrier ships equipped with diesel electric generators (DFDE/TFDE) to be transformed so that they can produce and supply electrical energy to electrical networks on land or to industries when they are moored in docks, pontoons, buoys, fixed or floating structures and/or anchored in bays closed or open to the sea. The system comprises a first power switch (401) connected to the main electrical panel (500) of the ship (1) and powered by a plurality of electricity generators (101), where said power switch (401) is arranged in the room of machines (10) and is connected to the ship's services (501); a second power switch (403), preferably arranged in the emergency panel room (20); and a connection box (404) connected to the power switches (401) and (403) by means of a high voltage cable (402), where said connection box (404) is attached to a support or bulkhead.

## Description

### FIELD OF THE INVENTION

The present invention consists of a system that allows gas carriers equipped with diesel electric generators (DFDE/TFDE) to be transformed so that they can produce and supply electrical energy to electrical networks on land or to industries when they are moored in docks, pontoons, buoys, fixed or floating structures and/or anchored in bays closed or open to the sea. The system uses the ship's electrical generators to produce electrical energy, which use as fuel the natural gas that is generated by evaporation in the ship's cargo tanks (BOG), thus avoiding having to burn and/or re-liquefy the boil-off, or in extremis it sending to the atmosphere.

### BACKGROUND OF THE INVENTION

LNG is called liquefied natural gas that has been refrigerated by cooling to approximately -160 °C. The fact that natural gas occupies a volume 600 times smaller when liquefied than in a gaseous state, makes its transportation in ships very practical. Transportation by ship is the third link in the integrated LNG chain. These ships are less polluting than other means of transportation since they can burn natural gas instead of fuel oil as a source of propulsion. The last link in the LNG supply chain is the import terminal. These terminals unload LNG and store it in insulated tanks until it is ready to undergo the regasification process. The ships arrive by sea to the unloading platforms of the import terminals, on land. The ships for transporting LNG have a very important advantage from the point of view of atmospheric pollution: they usually burn the natural gas itself instead of fuel oil as a propulsion source, with the consequent reduction of CO2 emissions (approximately 90%), thus contributing to reducing the so-called "greenhouse effect".

The present invention consists of a system that allows the modification of the electrical panel of gas carriers equipped with DFDE/TFDE electrical generators so that they can produce and supply electrical energy (EE) to electrical networks on land or to industries at the time they are moored in docks, pontoons, buoys, fixed or floating structures and/or anchored in bays closed or open to the sea without the need to have exclusive unloading terminals, storage tanks, regasification plants, or transportation networks. gas to combined cycle and cogeneration plants.

In the state of the art, American patent US7119460 discloses a system for using natural gas to safely supply large quantities (at least 30 megawatts) of electricity to consumers. The system includes a floating generator vessel that is located on the high seas and carries one or more turbo generator groups that use natural gas as fuel and whose electricity production is supplied through a power line that extends at least partially into the sea to the consumer. The consumer is a processing vessel (which processes natural gas and has equipment to transfer the liquefied gas to or from a tanker that stores more than 10,000 tons of liquefied gas. A portion of the gas is transferred from the processing vessel through a conduit over sea to the generating vessel to provide fuel. Another consumer is a land-based facility. Generation and process vessels are widely separated from each other (at least 0.2 kilometres) to protect personnel in the event of a gas explosion or since there are two (generator and processor) it allows them to be acquired quickly, which is especially useful for quickly supplying large amounts of electricity in recently developed areas.

American Priority Patent Publication TW586262 discloses a system and method for delivering excess electrical power to an electrical power grid from a marine transportation vessel while said marine transportation vessel is in port. The system comprises; a) an electrical distribution apparatus on board a maritime transport vessel and connected to at least one generator on board said maritime transport vessel; (b) at least one ship-side power cable connected to said electrical distribution apparatus; and (c) equipment connected to at least one electrical power network and adapted to supply power to said at least one electrical power network, wherein a shore side power cable is connected to said equipment and said power cable. ship-side power, where a shore-side cable is connected to the equipment and the ship-side cable, to complete the power transfer incorporates at least one generator, at least one electrical network circuit, so that while the maritime transport vessel is in the port and discharges fluid fuel, the excess electrical energy from the at least one generator is transmitted to the destination through the circuit. An electrical grid, where the fluid fuel is liquefied natural gas. THE method comprising the following steps: (a) connecting the distribution switch on a shipping vessel to at least one generator on the shipping vessel and providing electrical power for the shipping vessel.

In the state of the art, there is no reported or suggested system that allows sending to land the excess energy that the ship has the capacity to generate in its LNG tanks and that it does not require for its normal operation, in such a way that it is avoided. be consuming the cargo vapours in their entirety in their generator engines or having to burn, in whole or at least partially, that surplus gas that is produced from the natural evaporation of the cargo in the gas combustion unit (GCU).

The improvement proposed in the present invention is the use of the maximum energy potential to generate electrical energy through the ship's own electrical generators, either sending it to the general electrical network, or to local networks such as hydrogen production plants, refuelling plants. -liquefaction or use for the needs of a regasification plant. This must be carried out, with the ship stopped, to take advantage of the gas (BOG) that is naturally produced in the cargo tanks as fuel for the electrical generators. If the (BOG) produced in the tanks is not used as fuel for the electrical generators, it must be burned in the CGU or in extremis sent to the atmosphere to control the pressure and temperature in the tanks.

### DESCRIPTION OF THE DRAWINGS

To complement the description that is being made and to help a better understanding of the characteristics of the invention, a set of drawings is attached as an integral part of said description, where, with an illustrative and non-limiting nature, the following has been represented:

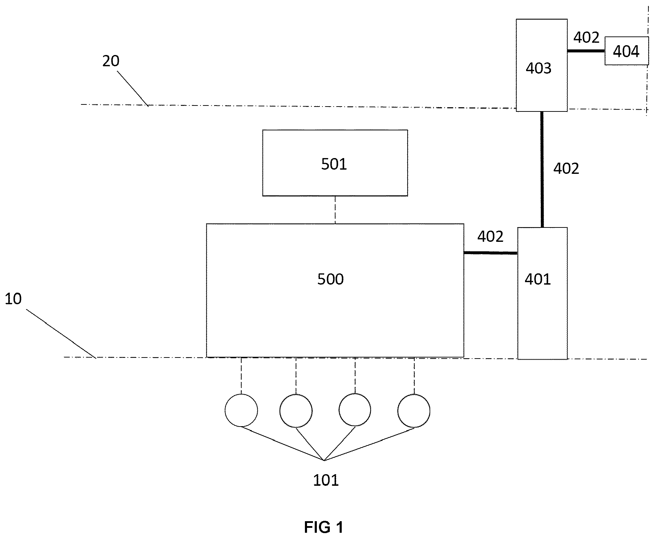

Figure 1.- shows a view of the elements that make up the system, showing a first power switch (401) connected to the main electrical panel (500) of the ship (1), which is in the engine room (10) powered by a plurality of electricity generators (101) and connected to the ship's services (501) to provide them with electrical energy. A second power switch (403) preferably arranged closest to the ground connection, such as the emergency engine room (20) or other similar space, and a connection box (404) connected to the power switches (401) and (403) by means of a high-tension cable (402).

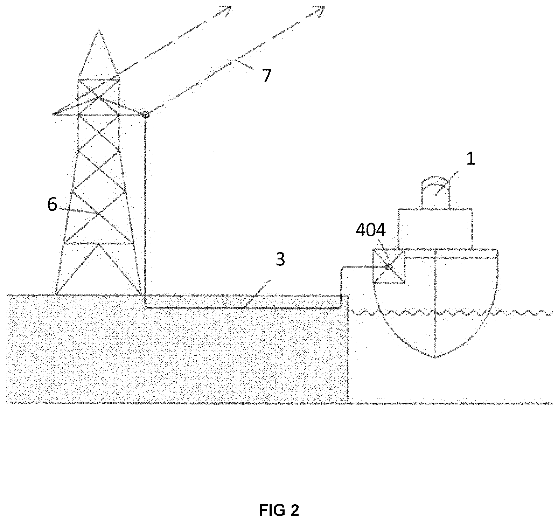

Figure 2.- shows a view of the case in which the ship (1) is docked at a dock or pontoon, it has an electric cable (3) between the ship (1) and the high line, voltage (6) on land and that will run through the port infrastructure through underground channelling until reaching the electrical distribution networks on land (7). It can also be seen that the connection box (404) allows connection with an electric cable (3) from the ground.

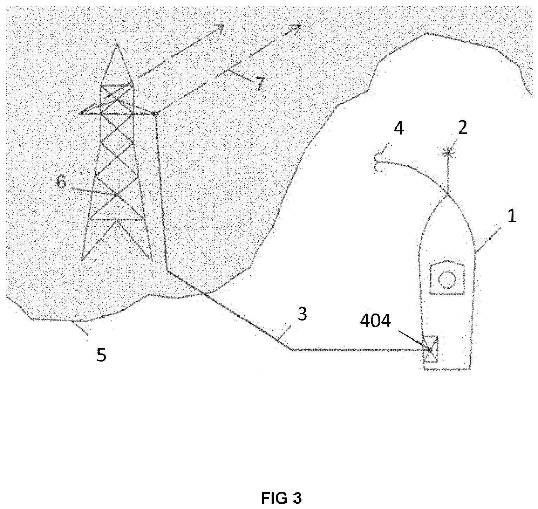

Figure 3.- shows a view for the case in which the ship (1) is moored to a buoy (2) or another fixed structure in free waters, it has an electric cable (3) between the ship (1) and the high voltage line (6). On land it will run along the seabed until it reaches the coast (5) and from there it will run through underground channelling until it reaches the electrical distribution networks (7) existing on land. It can also be seen that the connection box (404) allows connection with an electric cable (3) from the ground.

### DESCRIPTION OF THE INVENTION

The cargo containment system on a gas carrier is made up of insulated cargo tanks boxed within the inner hull and located in the bow-stern line. The spaces between the inner and outer hull are used for ballast and can also protect the tanks in the event of an emergency, such as a collision, grounding, etc. Between tank and tank are the cofferdams, which are all dry compartments, which have a heating system using glycol, since when they are in contact with surfaces that contain cargo at -160°, they need a system that keeps them at a temperature not very high.

The cargo tanks are double membrane, "Gaz Transport and Tecnigaz" model NO96-2. The inner hull, that is, the external face of each of the cargo tanks is lined with Gaz Transport's integrated insulation and containment system. This consists of 1) a thin flexible membrane called the primary membrane, which is in contact with the load, 2) a layer of plywood boxes filled with perlite called primary insulation, 3) a second flexible membrane identical to the primary called secondary membrane and 4) a second layer of wooden boxes also filled with perlite that form the secondary insulation. The capacity of the cargo tanks of a gas carrier is approximately 138,000 m3 in liquid state at -162°C.

During a normal voyage of the ship, despite such insulation, heat is transferred to the LNG cargo. The heat transferred to the LNG cargo through the tank insulation causes part of the cargo to evaporate naturally, a phenomenon called boil-off (BOG). The composition of the transported gas changes because the lighter components (which have a lower boiling point at atmospheric pressure) evaporate first. Thus, unloaded LNG has a lower percentage of nitrogen and methane content than loaded LNG, and a slightly higher percentage of ethane, propane, and butane, because methane and nitrogen evaporate faster than heavier gases that make up the initially loaded LNG. During the transportation of LNG by sea, in the cargo tanks, gas vapor (BOG) is produced due to the transfer of heat from the sea and the atmosphere through the insulation of the tanks. Gas vapor is also produced due to the movement of the ship (1). Under normal conditions, the BOG that is generated is used as fuel, burning it in the engines to produce electricity to propel the ship and supply electrical energy to all the electrical equipment installed on the ship. Vapor gas (BOG) is taken from the steam line and passes through an atmosphere separator and enters the ship's services (501). It then passes through a heater/cooler before reaching the engines. Therefore, part of the BOG that is produced in the cargo tanks of a ship (1) is used as fuel by the electricity generating engines in the engine room (10), which produce electrical energy to propel the ship (1) and to maintain the operation and services of the ship.

The energy needed to generate electricity that powers electric motors, pumps and on-board systems usually comes from identical motors. With 4 motors in operation a 100% power of approximately 42750 kW/h can be achieved. These engines use gas vapor (BOG) as fuel that is generated naturally and/or forced in the ship's cargo tanks. The engines produce electrical energy exclusively for the consumption of the ship itself. The engines can generate energy through the combustion of fuel oil, diesel, or natural gas from the naturally generated or forced BOG. Electrical energy is produced by alternators coupled to each engine. Most onboard systems are alternating current, so the energy generated by the engines only needs a frequency converter to be used. For the gas operating mode, the dual mode is usually applied (fuel-gas or diesel-gas, preferably the first), since it is the result of cleaner combustion of the gas. The gas for combustion in the engines is previously treated using a computerized control system called "WECS21", which among other processes includes the automatic control of filters, pressure regulators, temperature regulators and valves for the correct injection of gas into the cylinders depending on the eigenvalues of the gas. In pursuit of combustion efficiency, the WECS system controls the amount of gas injected into each cylinder individually, while the engine is in service.

The electrical energy produced by the onboard generators during the ship's navigation is used to propel the ship and to keep the ship's electrical services and installations in operation. Currently, when a gas carrier diesel equipped with electric generators (DFDE/TFDE), is in waiting situations (anchored or docked at a dock), with a minimum consumption of gas in its generating engines, it needs as a method, to maintain the pressure and temperature of the liquefied gas in the tanks, burn the excess vapours produced by the cargo naturally using equipment called a gas combustion unit or Gas Combustion Unit or Oxidizer (GCU).

Therefore, the electricity generation capacity of a gas carrier is underutilized when the ship is stationary, anchored or docked. The improvement proposed in the present invention is the use of the maximum energy potential to generate electrical energy through the electrical generators (101) of the ship (1), either sending it to the general electrical network, or to local networks such as production plants of hydrogen, re-liquefaction plants or use for the needs of a regasification plant. This ability to produce electricity makes it possible to send to land the surplus energy that the ship has the capacity to generate and not consume when the main propulsion of the ship is stopped, and it is not carrying out unloading operations. In this situation, the electricity generating engines (101) operating at maximum load consume almost all of the gas vapours (BOG) produced in the cargo tanks. Otherwise, the vapours that naturally form in the cargo tanks (BOG) would have to be burned in the GCU to control the pressure in the cargo tanks without obtaining any economic performance.

The present invention reveals the production and distribution of electrical energy from gas carriers through the electrical generators of the diesel-electric ships itself (DFDE/TFDE), which use as fuel the natural gas that evaporates in the cargo tanks (boiler off) naturally or forcefully when they are stopped in ports or roadstead, with their tanks loaded with liquefied natural gas and the contribution of the electrical energy produced to the existing high voltage networks on land, doing so through an electrical connection between the ship and land. The technology necessary to transport electrical energy from the ship to the shore facilities requires an additional electrical installation to be carried out on the ship and the installation of an electrical connection box located on the main deck of the ship that allows connecting the main electrical panel of the ship located in the engine room with the shore electrical network through the interconnection box located on the deck of the ship and thus being able to send said electrical energy produced by the ship's generators to the existing high voltage network on land and/or connection with specific industries, such as hydrogen generation industries which need to consume large amounts of electrical energy and natural gas to produce hydrogen, both energies can be supplied from the gas carrier.

To do this, the gas carrier must be stopped and moored to a dock or pontoon or moored to a buoy or fixed structures in ports, roadstead, bays, lakes, rivers and/or any navigable area in which the vessel can remain stationary safely.

### PREFERRED EMBODIMENT OF THE INVENTION

The present embodiment reveals the production and distribution of electrical energy from gas carriers through the diesel-electric generators of the ship itself (DFDE/TFDE), which use as fuel the natural gas that evaporates in the cargo tanks (boiler). off) naturally or forcefully when they are stopped in ports or roadstead, with their tanks loaded with liquefied natural gas and the contribution of the electrical energy produced to the existing high voltage networks on land, doing so through an electrical connection between the ship and land.

Currently, gas carriers equipped with diesel electric generators (DFDE/TFDE) do not have the possibility of transporting the electrical energy they can produce to facilities outside the ship on land.

The present invention is based on improving the main electrical panel of a diesel-electric gas carrier ship (DFDE/TFDE) through a system that allows the expansion of the main electrical panel of the ship and the incorporation of a new electrical installation from the main electrical panel in the engine room to the emergency generator room or other room on the main deck of the ship, so that the cable from shore can be connected to the onboard circuit and in this way the electrical energy produced on board can be transported to ground facilities.

The system comprises a first power switch (401) connected to the main electrical panel (500) of the ship (1), arranged in the engine room (10) which is powered by a plurality of electricity generators (101) and connected to the ship's services (501); a second power switch (403) preferably arranged closest to the ground connection, such as the emergency engine room (20) or other similar space; and a connection box (404) connected to the power switches (401) and (403) by means of a high voltage cable (402), where said connection box (404) is attached to a support or bulkhead in the room emergency engine or other space.

The function of this connection box (404) is to connect/disconnect the electrical cable (3) coming from land with the main electrical panel (500) of the ship (1). In this way, when the ground cable is connected and the onboard electrical generators are operating, the electrical energy produced on board a gas carrier can be transported to land using the electricity generators, which use natural gas as fuel for their operation transports the ship in its own cargo tanks.

The technology necessary to transport electrical energy from the ship (1) to shore facilities is well known, proven and relatively simple. An electrical cable (3) of appropriate diameter and with watertight connections would be needed. Ground facilities would include power and frequency transformers, depending on local or grid needs.

The electrical energy supplied from a ship (1) can be forwarded to land through high voltage lines (6) and/or directly to a hydrogen production facility (H₂) since the ship (1) It can simultaneously supply electricity and natural gas, both necessary to produce hydrogen. This allows the hydrogen production industry to supply itself with energy without having to use the traditional gas and electricity supply networks existing in the market.

When the ship (1) is docked at a dock, there is an electric cable (3) between the ship (1) and the high voltage line (6) on land and it will run through the port infrastructure through underground channelling or even by air if necessary to overcome uneven terrain until reaching the electrical distribution networks on the ground (7). (Figure 2)

When the ship (1) is moored to a buoy (2) or other fixed structure in free waters, there is an electric cable (3) between the ship (1) and the high voltage line (6) on land that will run along the seabed until reaching the coast (5) and from there it will be done through underground channelling and/or air route depending on the unevenness of the terrain until reaching the electrical distribution networks (7) existing on land. (Figure 3).

The buoy (2) or fixed mooring structure of the ship will have a platform with a reel where the section of electrical cable (3) can be stowed when it is not connected to the ship (1).

In the case of a ship (1) moored to a buoy or fixed structure or even anchored with anchors (4), to carry out the connection and disconnection operations of the electric cable (3) it is necessary to use an auxiliary boat to move the end of the electrical cable (3) to the side of the ship (1) and secure it to be lifted on board with the crane for both connection and disconnection.

The electrical cable (3) that connects the ship (1) with the high-voltage line (6) on land must be watertight and flexible at least at the connection ends. The end of the electrical cable (3) that is connected to the ship (1) will be stowed, when it is not being used, in a reel located in the port and/or dock.

The connection and disconnection of the electric cable (3) to the connection box (404) installed on the main deck of the ship (1) will be done using onboard cranes, which will allow the handling of the electric cable (3) with ease. The connection of the electric cable (3) to the connection box (404) will be made using existing technology through a manual and/or automatic connection.

The transportation of the electrical energy produced on board is carried out through the electric cable (402) with a specific section that depends on the energy to be transported, that is, 6.6 KV, three-phase or any other power.

A production of 35,000 KW/hour per vessel is estimated, which would represent a large contribution of electrical energy to the land grid, especially for those countries that do not have regasification plants.

## Claims

1. System incorporated in diesel-electric gas carrier ships (DFDE/TFDE) for the transformation of evaporated natural gas (BOG) inside the tanks into electrical energy and its distribution to land, which is **characterized by** comprising a first power switch (401 ) connected to the main electrical panel (500) of the ship (1) and powered by a plurality of electricity generators (101), where said power switch (401) is arranged in the engine room (10) and is connected to ship services (501); a second power switch (403), preferably arranged in the emergency panel room (20); and a connection box (404) connected to the power switches (401) and (403) by means of a high voltage cable (402), where said connection box (404) is attached to a support or bulkhead.

2. System incorporated in diesel-electric gas carrier ships (DFDE/TFDE) for the transformation of evaporated natural gas (BOG) inside the tanks into electrical energy and its distribution to land and its distribution to land according to claim 1, which is **characterized by** that the connection box (404) allows the connection of the electrical cable (3) from land with the main electrical panel (500) of the ship (1).

3. System incorporated in diesel-electric gas carrier ships (DFDE/TFDE) for the transformation of evaporated natural gas (BOG) inside the tanks into electrical energy and its distribution to land according to claims 1 and 2, which is **characterized in that** when the ship (1) is docked at a dock, there is an electric cable (3) between the ship (1) and the high voltage line (6) on land and it will run through the port infrastructure through of underground channelling until reaching the electrical distribution networks on land (7).

4. System incorporated in diesel-electric gas carrier ships (DFDE/TFDE) for the transformation of evaporated natural gas (BOG) inside the tanks into electrical energy and its distribution to land according to claim 3, which is **characterized in that** when the ship (1) is docked at a dock, there is an electric cable (3) between the ship (1) and the high voltage line (6) on land and it will run by air until it reaches the electrical distribution networks on land (7).

5. System incorporated in diesel-electric gas carrier ships (DFDE/TFDE) for the transformation of evaporated natural gas (BOG) inside the tanks into electrical energy and its distribution to land according to claims 1 and 2, which is **characterized in that** when the ship (1) is moored to a buoy (2) or other fixed structure in free waters, there is an electric cable (3) between the ship (1) and the high voltage line (6) on land and it will run along the seabed until reaching the coast (5) and from there it will be done through underground channelling until reaching the electrical distribution networks (7) existing on land.

6. System incorporated in diesel-electric gas carrier ships (DFDE/TFDE) for the transformation of evaporated natural gas (BOG) inside the tanks into electrical energy and its distribution to land according to claim 5, which is **characterized in that** when the ship (1) is moored to a buoy (2) or other fixed structure in free waters, there is an electric cable (3) between the ship (1) and the high voltage line (6) on land and it will run by air until reaching the existing electrical distribution networks (7) on land.

7. System incorporated in diesel-electric gas carrier ships (DFDE/TFDE) for the transformation of evaporated natural gas (BOG) inside the tanks into electrical energy and its distribution to land according to claim 5, which is **characterized in that** the buoy (2) or fixed mooring structure of the ship will have a platform with a reel where the section of electrical cable (3) can be stowed when it is not connected to the ship (1).

8. System incorporated in diesel-electric gas carrier ships (DFDE/TFDE) for the transformation of evaporated natural gas (BOG) inside the tanks into electrical energy and its distribution to land according to claims 1 and 2, which is **characterized in that** the electrical connection (3) that connects the ship (1) with the high-voltage line (6) on land must be watertight and flexible at least at the connection ends.

9. System incorporated in diesel-electric gas carrier ships (DFDE/TFDE) for the transformation of evaporated natural gas (BOG) inside the tanks into electrical energy and its distribution to land according to claims 1 and 2, which is **characterized in that** the connection the electrical cable (3) to the connection box (404) will be made through a manual connection.

10. System incorporated in diesel-electric gas carrier ships (DFDE/TFDE) for the transformation of evaporated natural gas (BOG) inside the tanks into electrical energy and its distribution to land according to claims 1 and 2, which is **characterized by** the fact that the connection the electrical cable (3) to the connection box (404) will be made through an automatic connection.
